# EUROPEAN PATENT SPECIFICATION

(11) **EP 1 628 731 B1**
(45) Date of publication and mention of the grant of the patent: **06.08.2008**
(21) Application number: 04739440.8
(22) Date of filing: 26.05.2004
(51) Int. Cl.: B01D 25/127, B01D 25/32

(54) **FILTER PRESS WITH AUTOMATIC DISCHARGE OF THE SEPARATED SOLID PHASE**
FILTERPRESSE MIT AUTOMATISCHER ENTFERNUNG DER ABGETRENNTEN FESTSTOFFPHASE
FILTRE-PRESSE A DECHARGE AUTOMATIQUE DE LA PHASE SOLIDE SEPAREE

(30) Priority: 06.06.2003 IT RE20030057
(43) Date of publication of application: 01.03.2006
(73) Proprietor: DIEMME S.P.A., 48022 Lugo (IT)
(72) Inventor: BARTALUCCI, Piero, 50059 Vinci (IT)
(74) Representative: Corradini, Corrado
(86) International application number: PCT/EP2004/005809
(87) International publication number: WO 2004/110588

(56) References cited:
- EP-A- 0 479 315
- US-A- 4 169 056
- US-A- 4 584 100
- US-A- 4 900 454

## Description

### TECHNICAL FIELD

The present invention relates to a filter press of the plate type, a typical use for which is in separating solids from liquids, including the wine-making and agricultural food sector.

### PRIOR ART

Such filter presses comprise at least two, and generally a plurality of, identical side-by-side vertical plates aligned in a horizontal direction and comprising two recesses in their faces.

Said plates lie between a fixed headpiece and a movable headpiece. By means of said movable headpiece, the plates can be either clamped together to define a plurality of filtration chambers, or be spaced apart to enable the separated solid phase to be discharged.

Two filter cloths, the dimensions of which are of the same order of magnitude as those of the plates, are associated with each chamber.

A region defined between the two cloths of each chamber, and in which the retained solid phase accumulates, is connected to a channel for entry of the material to be filtered. A region receiving the filtered liquid phase, and connected to a channel for its evacuation, is defined between said cloths and the respective plates.

As filtration proceeds, a panel or cake of solid particles forms between the two cloths of each chamber, and requires the plates to be removed for its discharge.

Moreover, the filter cloths become progressively more obstructed as filtration proceeds, so that they have to be cleaned periodically with a frequency which depends on the characteristics of the filter cloths and of the material or product to be filtered.

Pressurized water jets operated manually or automatically are generally used for said cleaning, during which the cloths are left in their filtration position on the plates, which are spaced apart.

A first type of filter press is known in which the plates are separated (shifted) one at a time by a suitable shifter unit, and a second type of filter press in which all the plates are spaced apart in a single operation by being connected together and to the headpieces, for example by two opposing lateral chains or the like.

Hereinafter, specific reference will be made to filter presses of the second type, however that stated is also applicable to filter presses of the first type, as will be apparent to experts of the art.

A problem afflicting said filter presses is that on shifting the plates the panels are often unable to separate from the cloth by the action of their own weight in order to fall through the gap defined by the spacing between the plates, but usually tend to remain adhering to said plates, or even if they separate from the cloth they often remain inclined and wedged between the open plates.

Hence the presence of at least one operator is required to discharge them, leading to extra operating times and costs.

Another problem of known filter presses is due to the fact that during cloth washing, the cloths are left in the position they occupied during filtration, as stated. This makes the washing operation difficult, and often a portion of the particles present on the cloth are forced behind the cloth by the water, with obvious consequences.

Document US 4 584 100 discloses a filter press with deviation elements which are in contact with the downstream face (filtrate side) of the filter cloth.

### DISCLOSURE OF THE INVENTION

The main object of the present invention is to overcome the aforestated problem within the context of a simple, rational, reliable and economical construction.

Said object is attained by a filter press presenting the characteristics defined in the claims.

In a totally general sense, it comprises at least two side-by-side vertical plates provided with respective filter cloths, and able to assume a first configuration in which they clamped together to define at least one filtration chamber, and a second configuration in which they are spaced apart to enable the solid material accumulated therein to be discharged. According to the invention, the cloths have a vertical dimension at least double the corresponding dimension of the plates, and are supported between the plates by a slider able slide in level between a raised filtration position in which the lower portions of the cloths lie between the plates, and a lowered discharge position in which said lower portions are disposed below said plates and spaced apart by the action of respective deviation and gliding elements positioned facing the lower edges of the plates.

With the upper and lower ends of the cloths there are associated respective generally rigid fixing members, such as two rods which extend beyond the vertical edges of the cloths to engage said slider.

Means enabling the cloths to adapt to the horizontal movements of the plates are preferably interposed between the rods and the slider.

For example said means can be in the form of small trolleys positioned at the ends of said rods and coupled to respective runways located on the slider.

According to an advantageous characteristic of the invention, respective wash units are preferably associated with said lower cloth deviation elements, and are connected to a source of pressurized water by way of suitable valve means.

Each wash unit can consist of a horizontal hollow bar positioned in the immediate vicinity of the corresponding deviation element, and provided with spray ports orientated towards the cloth surface.

As a variant, the lower deviation element also acts as a wash unit, in which case it will be hollow and be provided with spray ports positioned in the region in which the cloth slides.

Said spray ports are preferably shaped and/or distributed such as to create a curtain or blade of water which strikes without discontinuity the entire horizontal dimension of the transiting cloth.

All the objects of the invention are attained by virtue of the indicated means.

In this respect, the panels can be rapidly discharged completely and automatically, i.e. with no labour present, because the lowering of the cloths results in complete extraction of the panels from the filtration chambers, and the rearward folding of said cloths during descent ensures that the panels separate, to fall freely downwards.

Moreover, as the cloths are washed outside the filtration chambers, and specifically below them, there is no possibility of contamination of the draining plate surfaces by particles adhering to the cloths.

### BRIEF DESCRIPTION OF THE DRAWINGS

The constructional characteristics and merits of the invention will be more apparent from the ensuing detailed description given with reference to the figures of the accompanying drawings, which illustrate by way of nonlimiting example some particular preferred embodiments thereof.

Figure 1 is schematic side view showing a filter press according to the invention in its closed or filtering configuration, with the cloths raised.

Figure 2 is a view of Figure 1 from above.

Figure 3 is a view similar to that of Figure 1, but showing the filter press in its open configuration, with the cloths still raised.

Figure 4 is a view similar to the preceding, but with the cloths completely lowered.

Figure 5 shows a part of the section V-V indicated in Figure 4, but on an enlarged scale.

Figure 6 is a detailed view of the encircled part VI of Figure 4, on an enlarged scale.

Figure 7 is the section VII-VII of Figure 6.

Figure 8 shows a variant of the automatic wash system of Figures 6 and 7.

### BEST MODE FOR CARRYING OUT THE INVENTION

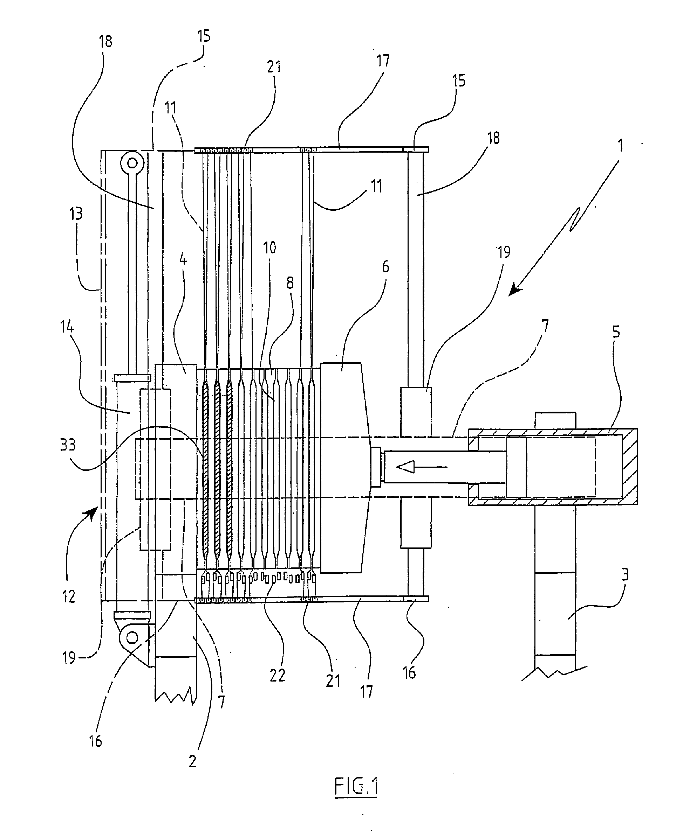

From the said figures, and in particular Figures 1-4, it can be seen that the filter press, indicated overall by 1, comprises two robust shoulders 2 and 3 respectively, which extend upwards from a base, not shown for simplicity. The shoulder 2 supports a fixed headpiece 4, while the shoulder 3 comprises a hydraulic cylinder-piston unit 5 carrying a movable headpiece 6 which slides along two longitudinal members 7 also acting as runways for a plurality of plates 8.

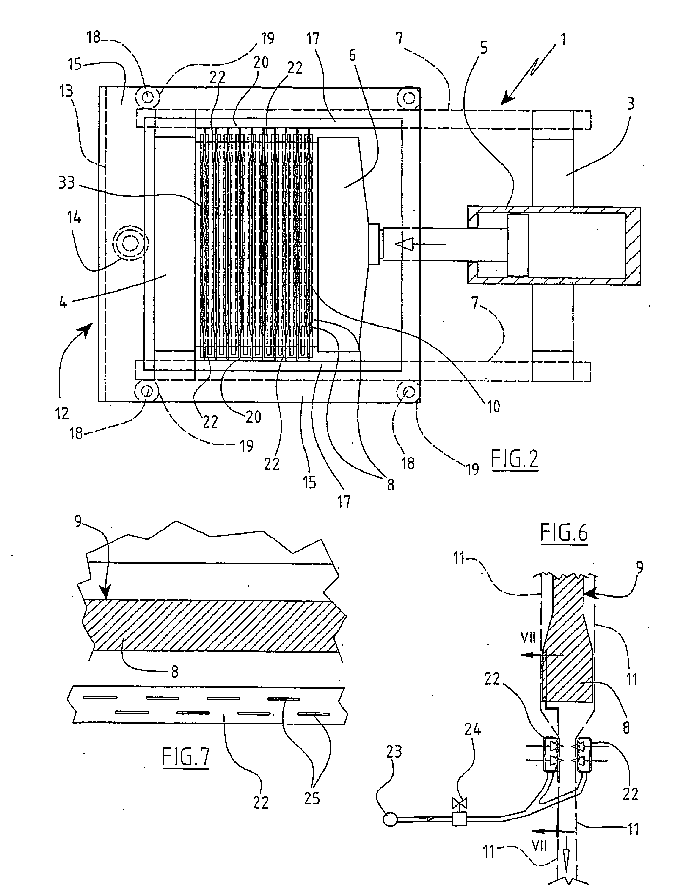

The plates 8 are of classical form, i.e. comprising a rectangular flat body, the opposing faces of which are provided with two recesses 9, pairs of which define a filtration chamber 10 when the filter press is closed (see Figures 1 and 2).

Other operational and constructional details of the aforesaid elements will not be given as they are usual per se and are well known to the expert of the specific sector.

According to the invention, with each filtration chamber 10 there are associated a pair of vertically lying filter cloths 11 able to slide up and down parallel to themselves.

Each cloth 11 is rectangular with its longitudinal axis vertical, its minor side being slightly greater than the width of the plates 8 and its major side being at least double the height of the plates 8.

The cloths 11 are moved by a mover device or slider 12 comprising a vertical structure 13 situated in the immediate vicinity of the shoulder 2 and connected thereto by a linear actuator 14, and two projecting horizontal end frames 15 and 16 situated respectively above and below the group of plates 8.

Said frames 15 and 16 are joined together by four vertical cylindrical bars 18 straddling the alignment of plates 8 (Figure 2), and slidably inserted into respective guide bushes 19 carried by the sides of the longitudinal members 7.

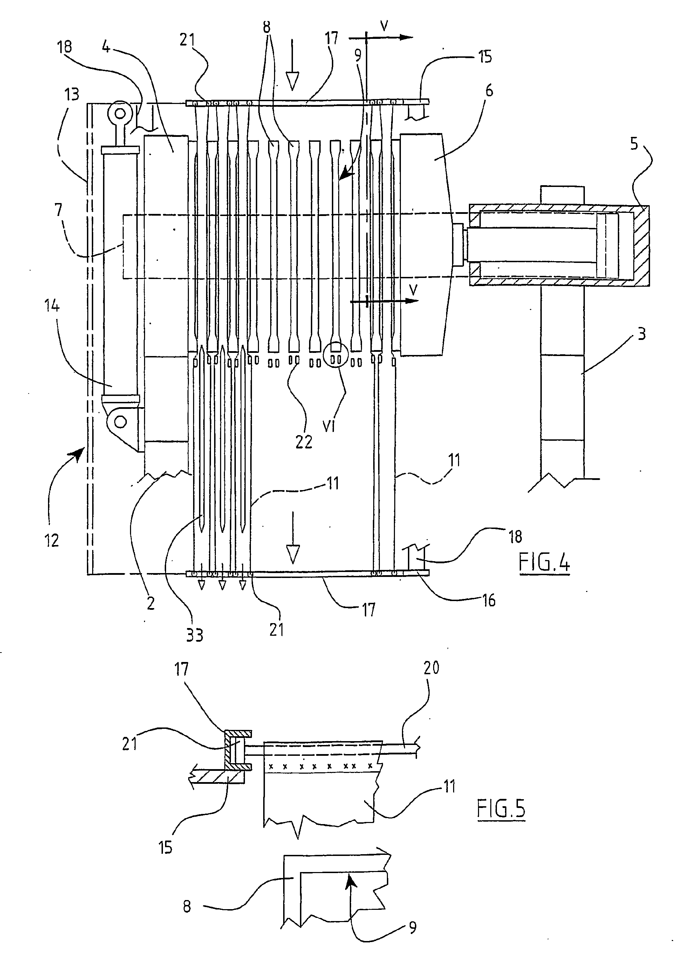

The facing edges of the longitudinal sides of said frames 15 and 16 form two brackets to which are fixed respective pairs of rails 17 between which the cloths 11 are positioned when in a generally extended configuration. As can be seen in Figure 5, the upper and lower end edges of each cloth 11 are folded about themselves and sewn together, to provide a totally extending loop within which a rod 20 is positioned.

The opposing ends of the rod 20 extend beyond the side edges of the cloth 11, where they each carry a small trolley, which in the illustrated example is in the form of an idle roller 21 engaging the respective rail or runway 17.

By means of said rollers 21 the cloths 11 are able to follow the mutual approach and withdrawal movements of the plates 8 (Figures 1-4).

As can be seen from Figures 6 and 7, below the lower edge of each plate 8 there are a pair of side-by-side horizontal elements 22 over which the lower portions of the respective pair of cloths 11 pass.

Said pair of deviation elements 22 are fixed to the vertical edges of the overlying plate 8, as shown in Figure 2, the total width of the pair being less than the thickness of the plate 8.

In the embodiment shown in Figures 6 and 7, the elements 22 each consist of a hollow bar of right rectangular cross-section with their major axis vertical and their edges rounded.

The two outer faces of each pair of bars 22 are set slightly back from the abutting faces of the overlying plate 8, the two inner faces being suitably spaced apart by an adequate gap to allow the cloths to pass.

Said bars 22 not only act as deviation elements for the cloths 11, but also as automatic wash units therefor. For this purpose, the bars 22 are connected in pairs to a general pressurized water manifold by way of a common control valve 24 (Figure 6), their inner faces being provided with spray ports 25 (Figure 7).

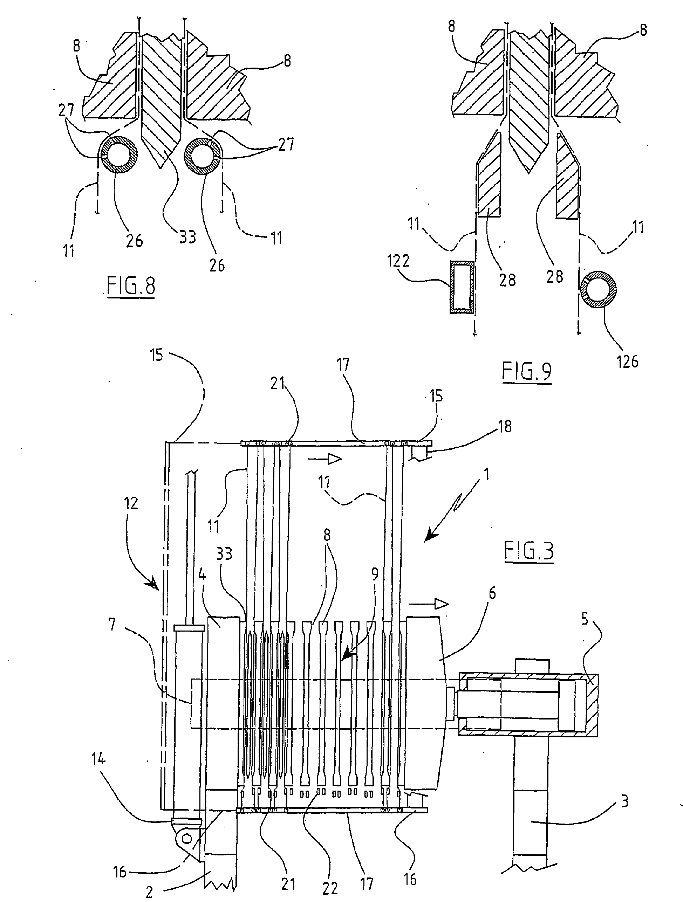

In the illustrated example said ports 25 are in the form of narrow slots positioned parallel to the longitudinal axis of the bar 22 and distributed at constant pitch in two superposed rows with the ports of the one interposed between those of the other. The purpose of this is to create a continuous horizontal curtain of pressurized water during the washing of the cloths 11. It is apparent that the bars 22 can be of other shapes, for example consisting of tubes 26 (see Figure 8) again provided with spray ports 27 of the same type as 25.

Moreover, if desired or considered advantageous, the said two deviation and wash functions for the cloths 11 can be split, for example by positioning below the lower edge of the plate 8 two upper side-by-side runners on which the cloths 11 slide, and two lower side-by-side spray bars of the same type as 22.

In the embodiments of Figures 6 to 8 the wash water strikes those faces of the cloths 11 against which the panel 33 forms.

According to the invention the cloths 11 can be washed by acting on their opposite faces to those against which the panel 33 forms.

This situation is shown in Figure 9, the wash here being more effective than that obtained in the embodiments shown in Figures 6-8 because the water sprayed in this manner is able to also detach from the cloths 11 most of the solid particles which during filtration had wedged into the interstices of their weave or matrix.

Figure 9 shows at the base of each plate 8 a pair of deviation blocks 28 over which those faces of the cloths 11 facing the panel 33 slide, below these there being positioned a pair of spray bars of either tubular form 122 (to the left in the figure) or of cylindrical form 126 (to the right), the delivery ports of which face the opposite faces of said cloths 11.

During the filtering operations the slider 12 is raised (Figure 1) and the plates 8 are tightened together, to clamp between them the lower portions of the cloths 11, which are grouped in the same manner as the plates 8 (Figures 1 and 2) by virtue of the trolleys 21 (Figure 5).

When the panels 33 are to be discharged, the movable headpiece 6 firstly receives the command to retract (Figure 3), with consequent mutual separation of plates 8 and cloths 11, after which the slider 12 is lowered (Figure 4).

This lowering results in extraction of the lower portions of the cloths 11 from the chambers 10, which cloths 11 also carry with them those panels 33 which have not succeeded in automatically separating by the action of their own weight.

Separation of said panels 33 still adhering to the cloths 11 is ensured by the deviation elements 22, or 26, or 28, as they withdraw the cloths from the panel 33 during the descent stage.

To return the filter press 1 to its filtration configuration, the operations are the reverse of those just described.

When the cloths 11 are to be washed, after discharge of the panels 33 the cloths 11 are made to rise while simultaneously the spray bars 22, or 26, or 122, or 126 are fed with water which, after striking the cloths 11, discharges downwards into the region in which the panels 33 are collected.

The merits and advantages of the invention are apparent from the aforegoing and from the accompanying figures.

The illustrated embodiments are non-exclusive. For example, as the useful part of the cloths 11 is only the lower part, while the upper part is used merely for connection and tensioning, there is nothing to prevent the upper part from consisting of a less costly full or perforated, flexible or non-flexible sheet.

## Claims

1. A filter press comprising at least two side-by-side vertical plates (8) provided with respective filter cloths (11) and movable in a horizontal direction such as to assume a first configuration in which they are clamped together to define a filtration chamber (10) between the cloths, and a second configuration in which they are spaced apart to enable the material accumulated therein to be discharged, the cloths (11) having a vertical dimension at least double the corresponding dimension of the plates (8), and being supported by a slider (12) arranged to move in level between a raised position in which the lower portions of the cloths lie between the plates, and a lowered position in which said lower portions are disposed below said plates, **characterised by** a pair of side by side deviation elements (22, 26, 28) fixed to each plate (8) under the lower edge thereof the total thickness of the pair being less than the thickness of the plate, said deviation elements being in contact with the cloths (11) on the face of the cloth against which the cake forms.

2. A filter press as claimed in claim 1, **characterised in that** said deviation elements are arranged below the lower edge of each plate, the facing generators of said deviation means being spaced apart by a distance greater than double the thickness of a cloth.

3. A filter press as claimed in claim 2, **characterised in that** an automatic wash unit for the respective cloth is associated with each of said deviation elements.

4. A filter press as claimed in claim 3, **characterised in that** said wash unit comprises a spray bar connected to a source of pressurized liquid by way of automatically activated valve means.

5. A filter press as claimed in claim 4, **characterised in that** said spray bar presents delivery ports shaped and/or distributed in such a manner as to create a continuous horizontal water curtain directed against the cloth.

6. A filter press as claimed in claim 5, **characterised in that** said spray bar is positioned in proximity to the respective deviation element and presents its ports facing that face of the cloth against which the cake forms.

7. A filter press as claimed in claim 5, **characterised in that** said spray bar is positioned in proximity to the respective deviation element and presents its ports facing that face of the cloth which is opposite the face against which the cake forms.

8. A filter press as claimed in claim 5, **characterised in that** said spray bar is defined by the deviation element itself, which is hollow and provided with delivery ports positioned in the region of mutual contact between said deviation element and cloth.

9. A filter press as claimed in claim 1, **characterised in that** said slider comprises a vertically movable structure carrying, for engaging the opposite edges of the cloths, two horizontal brackets situated respectively above and below the plates.

10. A filter press as claimed in claim 9, **characterised in that** said opposite ends of the cloths are each associated with a generally rigid retention means, such as a rod which extends beyond the vertical edges of the cloth.

11. A filter press as claimed in claim 10, **characterised in that** said rods are coupled to said brackets by means enabling the cloths to adapt to the reciprocal approach and withdrawal movement of the cloths.

12. A filter press as claimed in claim 11, **characterised in that** said means consist of trolley devices, such as an idle roller carried by the free end of each rod and supported by a respective rail arranged on the corresponding bracket.

## Patentansprüche

1. Filterpresse, die mindestens zwei Seite an Seite angeordnete Vertikalplatten (8) aufweist, die jeweils mit Filtergeweben (11) versehen und in einer Horizontalrichtung bewegbar sind, um eine erste Konfiguration, in der sie zusammengeklemmt sind, um eine Filtrierungskammer (10) zwischen den Geweben auszubilden, und eine zweite Konfiguration einzunehmen, in der sie voneinander beabstandet sind, um zu ermöglichen, dass das sich darin ansammelnde Material ausgestoßen werden kann, wobei die Gewebe (11) eine Vertikalabmessung aufweisen, die mindestens das Doppelte der entsprechenden Abmessung der Platten (8) beträgt, und wobei sie durch ein Gleitelement (12) getragen werden, welches angeordnet ist, um sich auf einer Ebene zwischen einer angehobenen Position, in der die unteren Abschnitte der Gewebe zwischen den Platten liegen, und einer abgesenkten Position zu bewegen, in der die unteren Abschnitte unter den Platten angeordnet sind,
**gekennzeichnet durch**
ein Paar von Seite an Seite angeordneten Ablenkungselementen (22,26,28), die an jeder Platte (8) unter der Unterkante davon befestigt sind, wobei die Gesamtdicke des Paares kleiner als die Dicke der Platte ist, und wobei die Ablenkungselemente mit den Geweben (11) auf der Seite des Gewebes in Kontakt stehen, auf der sich der Filterkuchen ausbildet.

2. Filterpresse nach Anspruch 1,
**dadurch gekennzeichnet, dass**
die Ablenkungselemente unter der Unterkante jeder Platte angeordnet sind, wobei die gegenüberliegenden Erzeugenden der Ablenkungseinrichtungen durch einen Abstand voneinander beabstandet sind, der größer als das Doppelte der Dicke eines Gewebes ist.

3. Filterpresse nach Anspruch 2,
**dadurch gekennzeichnet, dass**
eine automatische Wascheinheit für das jeweilige Gewebe mit jedem der Ablenkungselemente verbunden ist.

4. Filterpresse nach Anspruch 3,
**dadurch gekennzeichnet, dass**
die Wascheinheit eine Sprühleiste aufweist, die mittels einer automatisch aktivierten Ventileinrichtung mit einer Quelle von druckbeaufschlagter Flüssigkeit verbunden ist.

5. Filterpresse nach Anspruch 4,
**dadurch gekennzeichnet, dass**
die Sprühleiste Ausgabeanschlüsse aufweist, die so ausgebildet und/oder so verteilt sind, dass sie einen gegen das Gewebe ausgerichteten ununterbrochenen, horizontalen Wasservorhang erzeugen.

6. Filterpresse nach Anspruch 5,
**dadurch gekennzeichnet, dass**
die Sprühleiste in der Nähe des jeweiligen Ablenkungselementes positioniert ist und ihre Anschlüsse so angeordnet sind, dass sie der Seite des Gewebes zugerichtet sind, gegen die sich der Filterkuchen ausbildet.

7. Filterpresse nach Anspruch 5,
**dadurch gekennzeichnet, dass**
die Sprühleiste in der Nähe des jeweiligen Ablenkungselementes positioniert ist und ihre Anschlüsse so angeordnet sind, dass sie der Seite des Gewebes zugerichtet sind, die sich auf der entgegengesetzten Seite befindet, gegen sie sich der Filterkuchen ausbildet.

8. Filterpresse nach Anspruch 5,
**dadurch gekennzeichnet, dass**
die Sprühleiste durch das Ablenkungselement selbst festgelegt ist, welches hohl und mit Ausgabeanschlüssen versehen ist, die in dem Bereich des gegenseitigen Kontaktes zwischen dem Ablenkungselement und dem Gewebe positioniert sind.

9. Filterpresse nach Anspruch 1,
**dadurch gekennzeichnet, dass**
das Gleitelement eine vertikal bewegbare Konstruktion aufweist, die zur Ineingriffnahme der entgegengesetzten Kanten der Gewebe zwei jeweils oberhalb und unterhalb der Platten angeordnete Horizontalhalterungen aufweist.

10. Filterpresse nach Anspruch 9,
**dadurch gekennzeichnet, dass**
die entgegengesetzten Enden der Gewebe jeweils mit einer im Allgemeinen starren Rückhalteeinrichtung wie zum Beispiel einem Stangenelement verbunden sind, welches sich über die Vertikalkanten des Gewebes hinaus erstreckt.

11. Filterpresse nach Anspruch 10,
**dadurch gekennzeichnet, dass** die Stangen mit den Halterungen durch Einrichtungen verbunden sind, die es ermöglichen, dass sich die Gewebe an die wechselseitige Annäherungs- und Rückzugsbewegung der Gewebe anpassen.

12. Filterpresse nach Anspruch 11,
**dadurch gekennzeichnet, dass**
die Einrichtungen aus Laufkatzenvorrichtungen wie zum Beispiel einer Freilaufrolle bestehen, die durch das freie Ende einer jeden Stange und jeweils durch eine auf der entsprechenden Halterung angeordnete Schiene getragen ist.

## Revendications

1. Filtre presse comprenant au moins deux plaques verticales côte à côte (8) fournies avec des tissus filtrants (11) respectifs et que l'on peut déplacer dans une direction horizontale de façon à supporter une première configuration dans laquelle ils sont fixés ensemble pour délimiter une chambre de filtrage (10) entre les tissus, et une deuxième configuration dans laquelle ils sont espacés pour permettre à la matière accumulée dans ceux-ci d'être déchargée, les tissus (11) ayant une dimension verticale correspondant au moins le double de la dimension des plaques (8), et supportés par un coulisseau (12) agencé de manière à se déplacer entre une position élevée, dans laquelle les parties inférieures des tissus gisent entre les plaques, et une position abaissée dans laquelle lesdites parties inférieures sont disposées en dessous desdites plaques, **caractérisé par** une paire d'éléments de déviation (22, 26, 28) côte à côte fixés à chaque plaque (8) en dessous du bord inférieur de celles-ci l'épaisseur totale de la paire étant inférieure à celle de la plaque, lesdits éléments de déviation étant en contact avec les tissus (11) sur la face du tissu contre laquelle le gâteau se forme.

2. Filtre presse selon la revendication 1, **caractérisé en ce que** lesdits éléments de déviation sont agencés en dessous du bord inférieur de chaque plaque, les générateurs avant desdits moyens de déviation étant espacés par une distance supérieure au double de l'épaisseur d'un tissu.

3. Filtre presse selon la revendication 2, **caractérisé en ce qu'**une unité de rinçage automatique pour les tissus respectifs est associée à chacune desdits éléments de déviation.

4. Filtre presse selon la revendication 3, **caractérisé en ce que** ladite unité de rinçage comprend une barre de vaporisation reliée à une source de liquide pressurisé grâce à des moyens de vannes activées automatiquement.

5. Filtre presse selon la revendication 4, **caractérisé en ce que** ladite barre de vaporisation présente des orifices de libération formés et/ou répartis de façon à créer un rideau d'eau horizontal permanent dirigé contre le tissu.

6. Filtre presse selon la revendication 5, **caractérisé en ce que** ladite barre de vaporisation est positionnée à proximité des éléments de déviation respectifs et présente ses orifices faisant face à la face du tissu contre laquelle le gâteau se forme.

7. Filtre presse selon la revendication 5, **caractérisé en ce que** ladite barre de vaporisation est positionnée à proximité des éléments de déviation respectifs et présente ses orifices faisant face à la face du tissu qui est à l'opposé de la face contre laquelle le gâteau se forme.

8. Filtre presse selon la revendication 5, **caractérisé en ce que** ladite barre de vaporisation est délimitée par l'élément de déviation même, qui est creux et fourni avec les orifices de libération positionnés dans la région de contact mutuel entre ledit élément de déviation et le tissu.

9. Filtre presse selon la revendication 1, **caractérisé en ce que** ledit coulisseau comprend une structure pouvant être déplacée verticalement portant, pour mettre en contact les deux bords opposés des tissus, deux crochets horizontaux situés respectivement au-dessus et en dessous des plaques.

10. Filtre presse selon la revendication 9, **caractérisé en ce que** lesdites extrémités opposées des tissus sont chacune associée à un moyen de retenue généralement rigide, tel qu'une tige qui s'étend au-delà des bords verticaux du tissu.

11. Filtre presse selon la revendication 10, **caractérisé en ce que** lesdites tiges sont couplées auxdits crochets grâce à des moyens permettant aux tissus de s'adapter au mouvement réciproque de rapprochement et de retrait des tissus.

12. Filtre presse selon la revendication 11, **caractérisé en ce que** lesdits moyens sont composés de dispositifs sous forme de chariots, tels qu'un galet libre porté par l'extrémité libre de chaque tige et supporté par un rail respectif agencé sur le crochet correspondant.
